# EUROPÄISCHE PATENTSCHRIFT

(11) **EP 0 833 064 B1**
(45) Veröffentlichungstag und Bekanntmachung des Hinweises auf die Patenterteilung: **04.12.2002**
(21) Anmeldenummer: 97113175.0
(22) Anmeldetag: 31.07.1997
(51) Int. Cl.: F16B 7/04, E04B 1/58

(54) **Verbindungseinrichtung für Längselemente**
Assembly for elongated elements
Assemblage pour des éléments allongés

(30) Priorität: 25.09.1996 DE 29616635 U
(43) Veröffentlichungstag der Anmeldung: 01.04.1998
(73) Patentinhaber: Festo AG & Co, 73734 Esslingen (DE)
(72) Erfinder: Stoll, Kurt, Dr., 73732 Esslingen (DE); Moritz, Manfred, 73207 Plochingen (DE)
(74) Vertreter: Abel, Martin, Dipl.-Ing.

(56) Entgegenhaltungen:
- FR-A- 1 514 258
- FR-A- 2 153 804
- FR-A- 2 663 086
- FR-A- 2 712 044
- GB-A- 737 693
- GB-A- 2 070 721
- GB-A- 2 138 195

## Beschreibung

Die Erfindung betrifft eine Verbindungseinrichtung für Längselemente, mit mindestens einem Verbindungskörper, der wenigstens zwei in verschiedene Richtungen weisende Halteaufnahmen aufweist, die jeweils für die Aufnahme eines Längenabschnitts eines mittels einer Spanneinrichtung am Verbindungskörper festzuspannenden Längselementes geeignet sind, wobei der Verbindungskörper im Bereich wenigstens einer durch mindestens eine Halteaufnahme hindurchgehenden Trennebene in mehrere separate Klemmschalen unterteilt ist, die jeweils einen Halteaufnahmen-Abschnitt der jeweiligen, von der Trennebene durchsetzten Halteaufnahme aufweisen und die paarweise durch mindestens eine Spanneinrichtung derart lösbar miteinander verspannbar sind, daß sie die in den Halteaufnahmen befindlichen Längenabschnitte der Längselemente mit ihren Halteaufnahmen-Abschnitten klemmend beaufschlagen und festhalten, und wobei an wenigstens einer der separaten Klemmschalen eines Verbindungskörpers zusätzlich zu wenigstens einem Halteaufnahmen-Abschnitt mindestens eine vollständige Halteaufnahme angeordnet ist.

Eine derartige Verbindungseinrichtung geht beispielsweise aus der GB-A-2070721 hervor. Sie wird dazu verwendet, Längselemente wie beispielsweise Vierkantrohre oder sonstige Profilstäbe miteinander zu verbinden, um Gestelle, Rahmen, Regale oder sonstige Konstuktionen aufzubaren. Hierfur sind verdungskörper vorhanden, die die Knotenpunkte der miteinander verbundenen Längselemente darstellen. Die Längselemente werden zur gegenseitigen Verbindung mit ihrem jeweiligen zugewandten Ende in dafür am Verbindungskörper vorgesehene Halteaufnahmen eingesteckt. Mittels am Verbindungskörper vorgesehener Spanneinrichtungen werden die Längselemente an ihrem im Verbindungskörper befindlichen Längenabschnitt mit dem Verbindungskörper verspannt.

Durch die Teilung des Verbindungskörpers in mehrere Klemmschalen können die Längselemente bereits vor der Montage des Verbindungskörpers in ihre endgültige Position gebracht werden. Die Klemmschalen eines Verbindungskörpers können dann von verschiedenen Seiten her auf die zu verbindenden Längselemente aufgesetzt und mittels der Spanneinrichtungen lösbar miteinander verbunden werden. Ein Einstecken und damit ein Verschieben der Längselemente in axialer Richtung ist nicht notwendig. Durch das lösbare Verspannen der Klemmschalen untereinander werden gleichzeitig die in den Halteaufnahmen befindlichen Längenabschnitte der Längselemente durch die Klemmschalen klemmend beaufschlagt. Die Klemmkraft wird hier gleichmäßig auf eine größere Fläche verteilt, so daß punktuelle Ermüdungen oder Beschädigungen des Materials vermieden werden. Indem an mindestens einer der separaten Klemmschalen eine zusätzliche vollständige Halteaufnahme angeordnet ist, lassen sich sehr einfach auch Konstruktionen mit dreidimensionaler Erstreckung aufbauen. Bei der Montage ist es möglich, die Klemmschale zunächst mit einer vollständigen Halteaufnahme auf ein Längselement aufzustecken, bevor der gesamte Verbindungskörper an einem weiteren Längselement festgelegt wird.

Vergleichbare Verbindungseinrichtungen gehen auch aus FR-A-2663086, GB-A-2138195 und FR-A-2712044 hervor.

Aufgabe der Erfindung ist es, eine Verbindungseinrichtung zu schaffen, die die Montage von Rahmen, Gestellen, Gerüsten oder sonstigen aus Längselementen zusammengesetzten Konstruktionen wesentlich erleichtert und bei der übermäßige Materialbeanspruchungen der Längselemente infolge der Beaufschlagung durch die Spanneinrichtungen vermieden werden.

Die Aufgabe wird erfindungsgemäß dadurch gelöst, daß in der die vollständige Halteaufnahme umschließenden Wand der betreffenden Klemmschale zum klemmenden Beaufschlagen eines in ihr befindlichen Längenabschnittes eines Längselementes wenigstens ein zu der Halteaufnahme offener Spannschlitz ausgebildet ist, dem mindestens eine Spanneinrichtung zugeordnet ist, mit der sich seine Breite und dadurch der Querschnitt der Halteaufnahme zum Verspannen eines eingesteckten Längselementes durch elastische Verformung verringern läßt.

Auf diese Weise wird eine ähnliche Wirkung erzielt wie beim klemmenden Verspannen durch zwei separate Klemmschalen. Der Spannschlitz ersetzt hierbei die Trennebene. Auch bei dieser Maßnahme wird das festzuspannende Längselement in der Halteaufnahme über seinen Umfang flächig klemmend beaufschlagt und nicht punktuell.

Vorteilhafte Weiterbildungen des Gegenstands der Erfindung gehen aus den Unteransprüchen hervor.

Zweckmäßigerweise ist mindestens ein Verbindungskörper durch eine Trennebene in genau zwei Klemmschalen unterteilt. Die Positionierung von einem nur zwei Klemmschalen aufweisenden Verbindungskörper ist sehr einfach und erleichtert die Montage wesentlich.

Es ist weiterhin vorteilhaft, wenn eine Trennebene mindestens eines Verbindungskörpers durch vier Halteaufnahmen hindurchgeht, die derart angeordnet sind, daß die Längsachsen benachbarter Halteaufnahmen in senkrecht zueinander und parallel zur Trennebene ausgerichtete Richtungen weisen.

In einer weiteren vorteilhaften Ausführungsform verläuft die vollständige, an einer Klemmschale angeordnete Halteaufnahme senkrecht zu den Richtungen der Halteaufnahmen, die durch die Trennebene geteilt sind. Bei einer derartigen Ausführung können beispielsweise Eckverbindungen hergestellt werden, bei denen drei Längselemente oder drei Paare von zueinander koaxialen Längselementen rechtwinkelig zueinander liegen.

Desweiteren hat es sich als günstig erwiesen, wenn mindestens ein Verbindungskörper wenigstens ein Paar Halteaufnahmen enthält, die derart gegenüberliegend angeordnet sind, daß ihre Längsachsen zusammenfallen. Sind hierbei die Halteaufnahmen innen offen, so daß sich ein den Verbindungskörper durchsetzender Durchgang ergibt, so kann ein Längselement gleichzeitig durch beide Halteaufnahmen hindurchgehen und der Verbindungskörper kann an beliebiger Stelle längs eines Längselementes angesetzt werden. Zweckmäßigerweise haben die Halteaufnahmen hierbei untereinander den gleichen Querschnitt.

In einer weiteren Ausführungsform kann ein Verbindungskörper als Übergangsstück ausgebildet sein und mindestens zwei Halteaufnahmen unterschiedlichen Querschnitts enthalten. Ein solcher Verbindungskörper kann beispielsweise dazu verwendet werden, Längselemente verschiedenen Querschnitts in einem gemeinsamen System einsetzbar zu machen.

Weiterhin ist es günstig, wenn der Querschnitt mindestens einer und vorzugsweise sämtlicher Halteaufnahmen eines Verbindungskörpers rechteckig und hierbei insbesondere quadratisch ist.

Dies ermöglicht unter anderem die Verbindung von bei der Konstruktion von Gestellen, Regalen, Halterungen oder sonstigem besonders häufig verwendeten Vierkant-Profilelementen oder - rohren.

In einer besonders zweckmäßigen Ausführungsform sind die Spanneinrichtungen ausserhalb der Halteaufnahmen neben diesen angeordnet. Die Spanneinrichtungen wirken nicht direkt auf die in den Halteaufnahmen befindlichen Längenabschnitte der Längselemente ein, sondern beaufschlagen diese mittelbar über die von ihnen beaufschlagten Klemmschalen.

Desweiteren ist es vorteilhaft, wenn wenigstens eine Spanneinrichtung eines Verbindungskörpers eine Schraube und ein komplementäres Gegengewinde aufweist. Eine Schraube mit Gegengewinde stellt eine sehr einfache und kostengünstige Möglichkeit einer lösbaren Verbindung dar.

Ist das Gegengewinde einstückiger Bestandteil einer Klemmschale, entfällt ein separates zweites Bauteil der Spanneinrichtung. Beim Verspannen genügt es deshalb, die Schraube einzudrehen, ohne daß ein Gegenhalten an einem zweiten, separaten Bauteil notwendig wäre.

Eine hierzu alternative Bauform sieht vor, das Gegengewinde an einer Schraubenmutter auszubilden. Auch bei zum Beispiel aus Kunststoffmaterial bestehenden Klemmschalen können hierdurch hohe Gewindefestigkeiten erzielt werden, indem man Metallmuttern verwendet.

In diesem Zusammenhang ist es vorteilhaft, eine jeweilige Schraubenmutter verliergesichert und verdrehgesichert an der zugeordneten Klemmschale festzulegen. Hierzu könnte wenigstens eine Klemmschale zur Aufnahme der Schraubenmuttern komplementäre Sechskant-Ausnehmungen aufweisen, in die die Schraubenmuttern eingesetzt sind, wobei im eingesetzten Zustand ein Preßsitz vorliegen kann.

Haben die zusammengespannten Klemmschalen im Bereich der Trennebene einen rechteckförmigen und vorzugsweise quadratischen Umriß, ergeben sich zwischen benachbarten Halteaufnahmen Eckenbereiche, in denen sich die Spanneinrichtungen besonders gut anordnen lassen.

Als besonders vorteilhaft weil platzsparend und funktionell wird ein Verbindungskörper angesehen, der im Bereich seiner vorzugsweise einzigen Trennebene einen kreisförmigen Umriß hat. Die Klemmschalen können an ihrer der Fügefläche jeweils abgewandten Außenfläche insbesondere eben und parallel zur Trennebene abgeflacht sein, insbesondere wenn der Verbindungskörper lediglich zur Herstellung zweidimensionaler Verbindungen dienen soll. Sind auch dreidimensionale Verbindungen erwünscht, empfiehlt sich bei zweiteiligem Verbindungskörper eine halbkugelartige Ausbildung einer jeweiligen Klemmschale, so daß der Verbindungskörper im Gebrauchszustand im wesentlichen die Gestalt einer Kugel haben kann.

Desweiteren kann ein Adapterteil vorgesehen sein, das ein Spannen eines zylindrischen Teiles in einer Rechteckquerschnitt aufweisenden Halteaufnahme eines Verbindungskörpers ermöglicht, wobei es einen in der vorgenannten Halteaufnahme anzuordnenden, radial verformbaren Klemmabschnitt mit einer an den Querschnitt der Halteaufnahme angepassten Außenkontur und einer eine Klemmaufnahme definierenden zylindrischen Innenkontur zur Aufnahme des zu spannenden zylindrischen Teiles aufweist. Ein solches Adapterteil ermöglicht das Verspannen von Längselementen mit kreisrundem Querschnitt mittels Verbindungskörpern, die Halteaufnahmen mit rechteckigem bzw. quadratischem Querschnitt aufweisen. Die Herstellung eines weiteren Typs von Verbindungskörper mit runden Halteaufnahmen kann somit entfallen.

In einer besonders vorteilhaften Ausführungsform ist der Klemmabschnitt in mehrere längsverlaufende, radial zueinander bewegbare und in Umfangsrichtung der Klemmaufnahme beabstandete Klemmelemente unterteilt. Die einzelnen Klemmelemente werden durch eine jeweilige Klemmschale beim Verspannen radial aufeinander zubewegt und übertragen so die Klemmkraft auf das in der Klemmaufnahme befindliche zylindrische Teil.

Desweiteren ist es zweckmäßig, daß ein Drehstück vorhanden ist, das einen in der Klemmaufnahme festlegbaren zylindrischen ersten Befestigungsabschnitt und einen in festgelegtem Zustand aus der Klemmaufnahme herausragenden zweiten Befestigungsabschnitt zum Befestigen mindestens eines weiteren Bauteils aufweist. Das Drehstück wird mit seinem zylindrischen ersten Befestigungsabschnitt in der Klemmaufnahme des Adapterteils festgelegt. Dabei kann das Drehstück um seine Längsachse in einem beliebigen Winkel gedreht in der Klemmaufnahme positioniert werden. Alle an dem zweiten Befestigungsabschnitt des Drehstücks befestigten weiteren Bauteile können so in einer gewünschten winkelmäßigen Ausrichtung am Verbindungskörper angebracht werden.

Zweckmäßigerweise ist der zweite Befestigungsabschnitt eines Drehstücks quaderförmig ausgebildet.

In vorteilhafter Weise kann eine insbesondere C-profilförmige, an dem zweiten Befestigungsabschnitt des Drehstücks festlegbare Nutenschiene vorgesehen sein, in der mit einer Aufnahme für Befestigungselemente versehenen Nutensteine verschiebbar gelagert werden können, die zur Befestigung weiterer Bauelemente vorgesehen sind. Je nach gewählter Länge der Nutenschiene können so beliebig viele weitere Bauteile, wie zum Beispiel Sensoren, mittelbar mit dem Verbindungskörper verbunden werden.

Weiterhin kann ein der Anbringung von plattenähnlichen Körpern an einem Längselement dienendes Plattenanschlußteil vorgesehen sein, das mittels einer Spanneinrichtung an einem Längsteil festlegbar ist, wobei die Spanneinrichtung gleichzeitig zur Anbringung des Plattenanschlußteils an den plattenähnlichen Körper dient. Ein derartiges Plattenanschlußteil dient dazu, plattenähnliche Abdeckungen an aus Längselementen gebildeten Gestellen, Regalen oder ähnlichem zu befestigen. Das Plattenanschlußteil ist dabei mit dem jeweiligen Längselement verspannt und kann vor dem Verspannen zur Positionierung auf dem Längselement beliebig hin und her geschoben werden.

Es ist vorteilhaft, wenn die Verbindungskörper aus Kunststoff gefertigt sind. Durch das geringere Gewicht von Kunststoffkörpern sind leichte, und unter Umständen tragbare Konstruktionen realisierbar.

Nachfolgend wird die Erfindung anhand der beiligenden Zeichnung näher erläutert. In dieser zeigen:
- Figur 1: ein erstes Ausführungsbeispiel eines aus zwei Klemmschalen gebildeten Verbindungskörpers im Schrägbild, dessen eine Klemmschale eine vollständige Halteaufnahme enthält, die senkrecht zu allen anderen Halteaufnahmen angeordnet ist,
- Figur 2: den Verbindungskörper gemäß Figur 1, teilweise geschnitten in einer Ansicht gemäß Pfeil IV, mit Blick auf die vollständige Halteaufnahme,
- Figur 3: einen Verbindungskörper gemäß Figur 1 in geschlossenem Zustand in Gebrauchslage, aus Gründen der Vereinfachung jedoch ohne Darstellung der vollständigen Halteaufnahme, desweiteren ein Adapterteil, ein Drehstück, eine Nutenschiene, einen Nutenstein und zur Befestigung am Nutenstein geeignete weitere Bauteile im Schrägbild,
- Figur 4: ein weiteres Ausführungsbeispiel eines Verbindungskörpers, dessen Aufbau abgesehen von seiner kugelartigen Außengestalt im wesentlichen demjenigen des Verbindungskörpers gemäß Figur 1 entspricht, wobei allerdings beide Klemmschalen jeweils eine zusätzliche vollständige Halteaufnahme aufweisen,
- Figur 5: ein weiteres Ausführungsbeispiel eines als Übergangsstück ausgebildeten Verbindungskörpers in Gebrauchslage im Schrägbild, wiederum ohne Darstellung einer vorhandenen vollständigen Halteaufnahme,
- Figur 6: ein weiteres Ausführungsbeispiel eines aus drei Klemmschalen gebildeten Verbindungskörpers in Gebrauchslage im Schrägbild, und ohne Darstellung der vorhandenen vollständigen Halteaufnahme, und
- Figur 7: ein Ausführungsbeispiel eines Plattenanschlußteils in Gebrauchslage im Schrägbild.

Mit Hilfe der erfindungsgemäßen Verbindungseinrichtung können beliebige Konstruktionen wie zum Beispiel Regale oder Gestelle, Rahmen und Halterungen für Tische, Maschinen oder Fahrzeuge, und vieles andere mehr gebaut werden. Beispielsweise wäre es möglich, Halteeinrichtungen oder Gestelle für Maschinen und Maschinenteile in einer Produktionslinie oder im Ausbildungsund Lehrbereich zu konstruieren. Eine weitere Anwendung besteht beispielsweise im Bau von Regalen im Bereich der Lagerhaltung.

Die Verstrebungen derartiger Konstruktionen bestehen häufig aus Stangen-, stab- oder rohrähnlichen Längselementen 1. Zur Verbindung der Längselemente 1 untereinander sind Verbindungskörper 2 der erfindungsgemäßen Verbindungseinrichtung verwendbar. Die Verbindungskörper 2 bilden an den dafür vorgesehenen Stellen ein-, zwei- oder dreidimensionale Verbindungsknoten, aus denen die Längselemente 1 in verschiedene Richtungen ragen. Um die Längselemente am Verbindungskörper 2 festzu-spannen, sind Spanneinrichtungen 3 vorgesehen. Sie rufen eine Klemmkraft hervor, die die Längselemente 1 in ihrer gewünschten, vorherbestimmten Position am zugeordneten Verbindungskörper 2 hält.

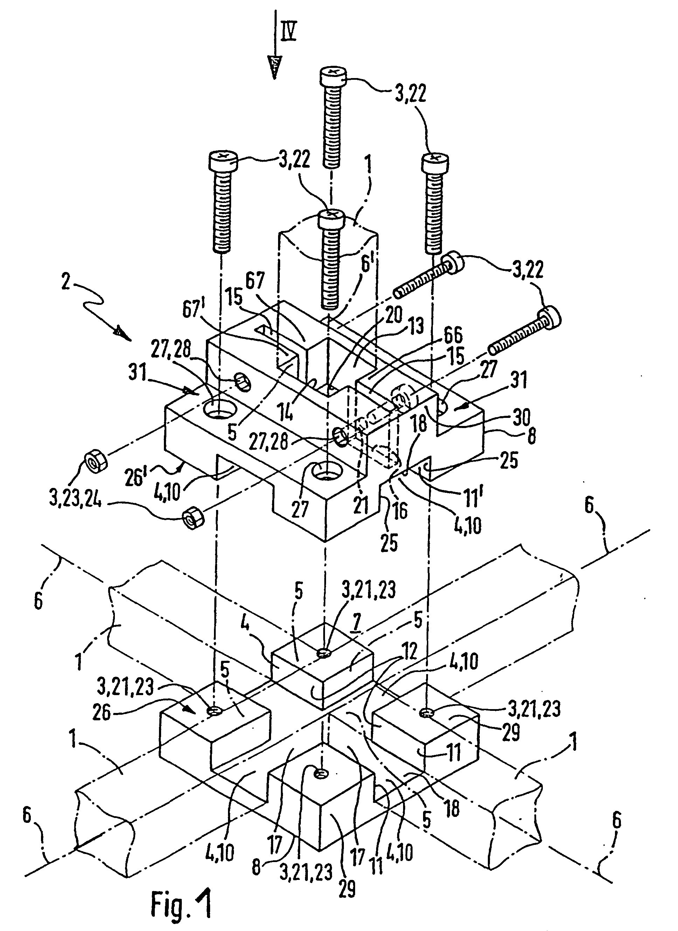

Jeder Verbindungskörper 2 weist wenigstens zwei in verschiedene Richtungen weisende, jeweils zur Aufnahme eines Längenabschnittes eines Längselements 1 geeignete Halteaufnahmen 4 auf. In den Ausführungsbeispielen gemäß den Figuren 1, 2 und 5 enthält der Verbindungskörper 2 vier Halteaufnahmen 4. Nicht jede Halteaufnahme 4 muß in Gebrauchslage des Verbindungskörpers 2 ein Längselement 1 enthalten.

Durch wenigstens eine Trennebene 7 ist der Verbindungskörper 2 in mehrere Klemmschalen 8 geteilt. Die Klemmschalen 8 können aus Vollmaterial bestehen. Sie sind über die Spanneinrichtungen 3 quer zur Trennebene 7 lösbar gegeneinander verspannbar, so daß sie im Bereich der Halteaufnahmen 4 an Längenabschnitten 5 der Längselemente 1 anliegen und fest gegen diese gepreßt werden. Somit wird durch das lösbare Verbinden der Klemmschalen 8 gleichzeitig eine Verspannung der im Verbindungskörper 2 befindlichen Längenabschnitte 5 der Längselemente 1 erreicht.

In der Regel weisen alle Halteaufnahmen 4 eines Verbindungskörpers 2 den gleichen Querschnitt auf. Insbesondere sind sowohl die Querschnittsfläche als auch die Querschnittsaußenkontur identisch. Der Querschnitt der Halteaufnahme 4 ist bei allen Ausführungsbeispielen rechteckig, vorzugsweise quadratisch. Dadurch werden die Längselemente 1 im Verbindungskörper 2 nicht nur gegen eine relativ zueinander gerichtete Bewegung festgelegt, sondern ebenfalls gegen eine Drehung um ihre eigene Längsachse gesichert. Die Längselemente 1 werden dann beispielsweise von Vierkant-Rohren oder von sonstigen Vierkant-Profilstäben gebildet.

Indem die Trennebene 7 eines jeweiligen Verbindungskörpers 2 durch mindestens eine und vorzugsweise durch mehrere Halteaufnahmen 4 hindurchläuft, werden auch diese von der Trennebene 7 durchsetzten Halteaufnahmen 4 in Längsrichtung unterteilt, und zwar in eine der Anzahl der Klemmschalen 8 entsprechende Anzahl von Halteaufnahmen-Abschnitten 4'. Diese sind zur Trennebene 7 hin offen. Sind die Klemmschalen 8 im Bereich der Trennebene 7 aneinandergesetzt, so ergänzen sich die einander zugeordneten Halteaufnahmen-Abschnitte 4' zur jeweiligen Halteaufnahme 4. In Fällen, in denen wie bei den bevorzugten Ausführungsbeispielen gemäß Figuren 1 bis 7 der Verbindungskörper 2 von nur einer Trennebene 7 geteilt wird und über lediglich zwei Klemmschalen 8 verfügt, definiert ein jeweiliger Halteaufnahmen-Abschnitt 4' zweckmäßigerweise jeweils eine Hälfte der betreffenden Halteaufnahme 4, wobei die Querschnittskonturen der einander zugeordneten HalteaufnahmenAbschnitte 4' identisch sind. Sie bilden in diesem Falle zwei jeweils an einem der zusammenzuspannenden Klemmschalen 8 angeordnete halbschalenförmige Hälften 10 der betreffenden Halteaufnahme 4.

Die Ausführungsbeispiele der Verbindungskörper 2 gemäß der Figuren 1 bis 5 weisen alle wenigstens ein Paar Halteaufnahmen 4 auf, deren Längsachsen 6 zusammenfallen. Besitzen die beiden Halteaufnahmen 4 einen identischen Querschnitt, so kann ein Längselement 1 bei entsprechender Ausgestaltung der Klemmschalen 8 durch beide Halteaufnahmen 4 hindurchgehen. Eine derartige Ausführung ist in der Figur 1 näher zu erkennen. Dort enthält ein jeweiliger Verbindungskörper 2 zwei dieser Halteaufnahmepaare. Die hier jeweils paarweise koaxial aufeinanderfolgend angeordneten Halteaufnahmen 4 sind nicht nur zur Außenfläche des Verbindungskörpers 2 hin, sondern auch an den einander axial zugewandten Innenseiten 12 offen. Dadurch gehen die genannten Paare von Halteaufnahmen 4 in Richtung der Längsachse ineinander über und bilden praktisch einen den Verbindungskörper 2 parallel zur Trennebene 7 vollständig durchsetzenden Durchgang 17. Dies ermöglicht es, die Klemmschalen 8 derart an ein Längselement 1 anzusetzen, daß dieses den Verbindungskörper 2 durchsetzt und auf entgegengesetzten Seiten herausragt. Sind mehrere Paare von Durchgänge 17 bildenden Halteaufnahmen 4 vorhanden, so kreuzen sich die Durchgänge 17 zweckmäßigerweise. Beim Ausführungsbeispiel gemäß Figuren 1 bis 3 sind insgesamt vier Halteaufnahmen vorhanden, die paarweise jeweils einen zu zwei entgegengesetzten Außenflächen ausmündenden Durchgang 17 bilden, wobei sich die beiden Durchgänge rechtwinklig kreuzen. Wird hierbei ein Durchgang 17 zur Aufnahme eines durchgehenden Längselementes 1 verwendet, wird der andere Durchgang von dem betreffenden Längselement 1 unterbrochen. Es besteht dann jedoch die Möglichkeit, an den voneinander getrennten Halteaufnahmen 4 jeweils den Endabschnitt eines weiteren Längselementes 1 festzulegen, das stumpf an das durchgehende Längselement anstoßen kann.

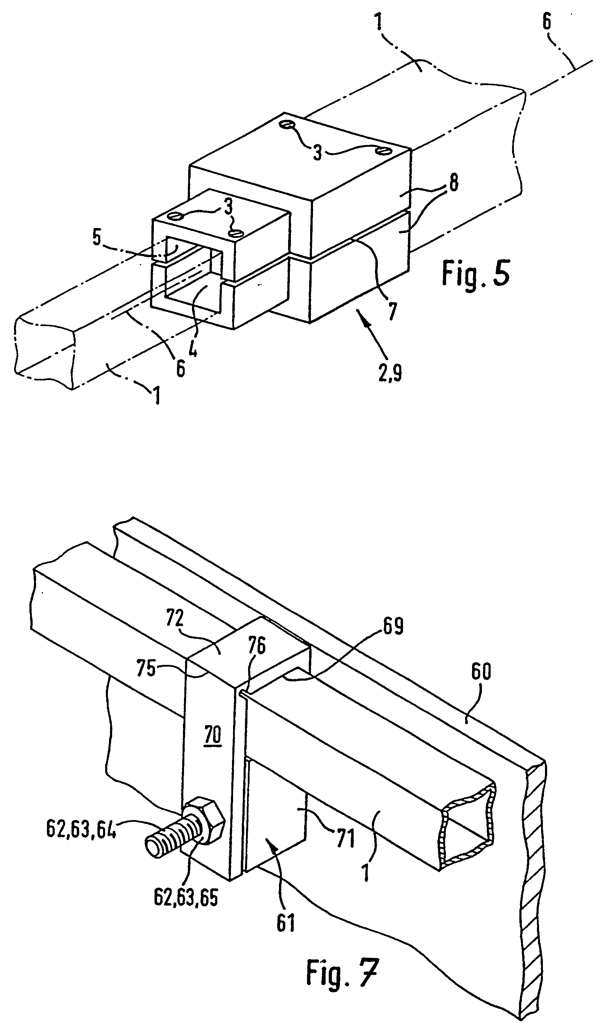

Im Ausführungsbeispiel der Figur 5 sind die Querschnitte der sich koaxial gegenüberliegenden Halteaufnahmen 4 unterschiedlich groß. Dieser Verbindungskörper 2 ist zur Aufnahme von Längselementen 1 mit unterschiedlich großem Querschnitt als Übergangsstück 9 ausgebildet. Er dient als Koppelglied, wenn zwei unterschiedlich dicke oder unterschiedliche Querschnittsform aufweisende Längselemente 1 gerade miteinander verbunden werden müssen. Selbstverständlich ist es ebenfalls möglich, das Übergangsstück 9 als Winkelverbindungsstück auszubilden, bei dem die Längsachsen der Halteaufnahmen 4 winkelig zueinander ausgerichtet sind.

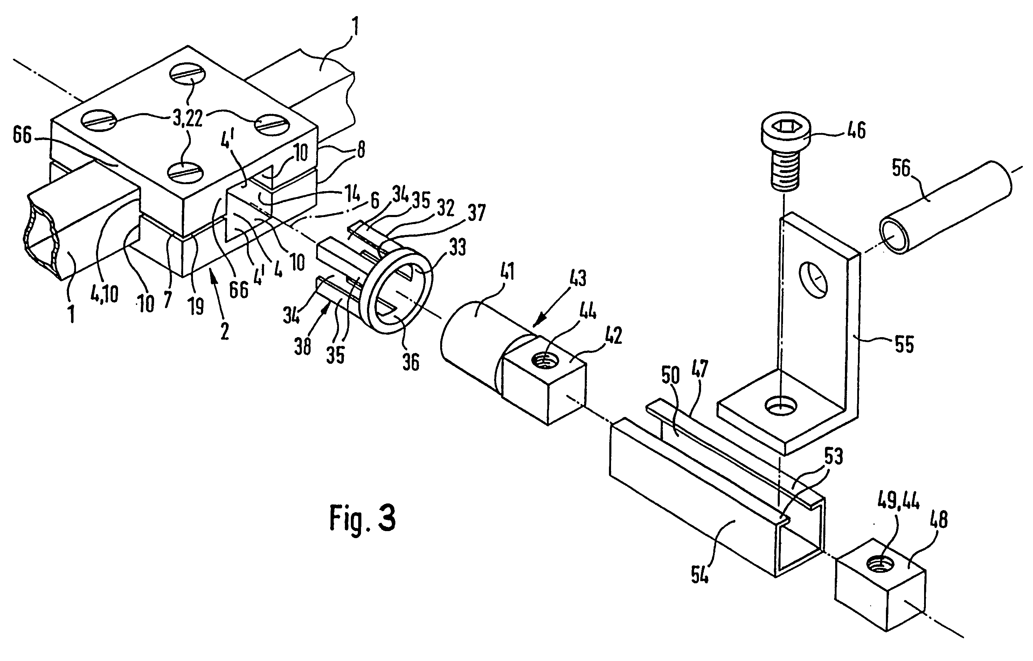

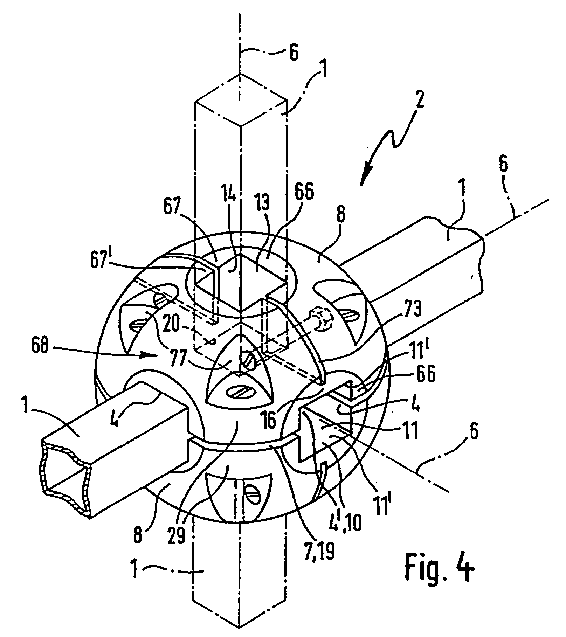

Bei den Ausführungsformen der Verbindungskörper 2 gemäß den Figuren 1 bis 5 trennt eine einzige, vorzugsweise nicht abgestufte Trennebene 7 den Verbindungskörper 2 in genau zwei Klemmschalen 8. Diese Trennebene 7 durchsetzt vier in dieser oder parallel zu dieser Ebene ausgerichtete Halteaufnahmen 4 in Längsrichtung. Benachbarte, von der Trennebene 7 geteilte Halteaufnahmen 4 weisen jeweils in senkrecht aufeinanderstehende Richtungen. In diesem speziellen Fall fallen die Achsen gegenüberliegend angeordneter Halteaufnahmen 4 aufeinander, so daß die Halteaufnahmen ein ebenes Kreuz formen. Eine jeweilige Klemmschale 8 enthält die Hälfte der von der Trennebene 7 geteilten Halteaufnahme 4. In Gebrauchslage gemäß Figuren 3 und 4 setzt sich die Halteaufnahme 4 aus zwei an jeweils einer der Klemmschalen 8 befindlichen Halteaufnahmen-Abschnitten 4' bzw. halbschalenförmigen Hälften 10 einer Halteaufnahme 4 zusammen.

In im Bereich der Trennebene 7 aneinandergesetzer Gebrauchslage bilden die beiden Klemmschalen 8 des Verbindungskörpers 2 der Ausführungsformen gemäß Figuren 1 bis 3 einen im wesentlichen quaderförmigen Körper. Im Bereich der Trennebene 7 ist der Umriß der beiden Klemmschalen 8 rechteckig. In der beim Ausführungsbeispiel ausgeführten Variante ist dieser Umriß quadratisch.

Im Gegensatz dazu hat die Ausführungsform gemäß Figur 4 im Bereich der Trennebene 7 einen kreisähnlichen Umriß. Die Kreislinie ist im Bereich der Ausmündungen der Halteaufnahmen 4 leicht abgeflacht. Insgesamt gesehen hat der Verbindungskörper gemäß Figur 4 eine kugelähnliche Gestalt, wobei jede der beiden vorhandenen Klemmschalen 8 nach Art einer Halbkugel geformt ist.

Eine jeweilige Halteaufnahme 4 ist, bezogen auf ihre Längsachse 6, umfangsseitig von einer Haltewand 11 umgeben bzw. definiert. Durch die die Halteaufnahme 4 unterteilende Trennebene 7 wird die Haltewand 11 in zwei Wandabschnitte 11' unterteilt, die jeweils an einer der beiden Klemmschalen 8 angeordnet sind und die Begrenzung des dortigen Halteaufnahmen-Abschnittes 4' bilden. Die Innenkontur einer jeweiligen Halteaufnahme 4 ist vorzugsweise zumindest im wesentlichen komplementär zur Außenkontur des festzuspannenden Längenabschnittes 5 des Längselementes 1 ausgebildet, so daß der betreffende Längenabschnitt 5 in gespanntem Zustand von der Haltewand 11 eng umschlossen wird. Im Bereich der Trennebene 7 kann allerdings ein mehr oder weniger großer Spalt 19 vorliegen. Werden die Klemmschalen 8 durch die mindestens eine Spanneinrichtung 3 quer zur Trennebene 7 gegeneinander gespannt, so wird der in der Halteaufnahme 4 befindliche Längenabschnitt 5 von den zur Trennebene 7 weisenden Flächenabschnitten 18 der Halteaufnahmen-Abschnitte 4' in einander entgegengesetzte Richtungen beaufschlagt und festgespannt.

Handelt es sich wie bei den Ausführungsbeispielen um rechteckförmig konturierte Halteaufnahmen 4 und Längselemente 1, so sind die die Längenabschnitte 5 beaufschlagenden Flächenabschnitte 18 der Halteaufnahmen 4 von parallel zur zugeordneten Trennebene 7 verlaufenden Flächenabschnitten der Halteaufnahmen-Abschnitte 4' gebildet. Die sich an diese Flächenabschnitte 18 anschließenden und rechtwinklig zu ihnen verlaufenden Seitenflächen 25 flankieren den jeweiligen Längenabschnitt 5 seitlich und bewirken eine Stabilisierung, indem sie Querbewegungen des Längselementes 1 rechtwinklig zur Längsachse 6 und parallel zur Trennebene 7 verhindern.

Um eine hohe Klemmkraft auf die Längselemente 1 übertragen zu können, ist es zweckmäßig, die Anordnung so zu treffen, daß die Klemmschalen 8 im gespannten Gebrauchszustand mit einem gewissen Abstand zueinander angeordnet sind, so daß der schon erwähnte Spalt 19 vorliegt. Die Klemmschalen 8 liegen sich dann im Bereich der Trennebene 7 mit einander zugewandten Fügeflächen 26, 26' beabstandet gegenüber. Dadurch ist gewährleistet, daß die Klemmschalen 8 nicht aneinander anliegen, bevor das zugeordnete Längselement 1 festgespannt ist. Man kann allerdings die Auslegung so treffen, daß die Querabmessungen der Halteaufnahmen 4 und der Längselemente 1 derart aufeinander abgestimmt sind, daß in der festgespannten Gebrauchslage der Spalt 19 nicht mehr vorhanden ist und die Klemmschalen 8 mit ihren Fügeflächen 26, 26' fest aneinander anliegen, so daß praktisch eine Begrenzung des Spannweges erfolgt, der ein zu starkes Anziehen und ein eventuelles Beschädigen der Verbindungskörper 2 verhindert.

Zusätzlich zu den durch die Trennebene 7 aufgespaltenen Halteaufnahmen 4 verfügen die Verbindungskörper 2 gemäß Darstellung in Figuren 1, 2 und 4 an mindestens einer Klemmschale 8 zusätzlich über eine im wesentlichen senkrecht auf der Trennebene 7 und den durch diese Trennebene 7 geteilten Halteaufnahmen 4 stehende vollständige Halteaufnahme 13. Die vollständige Halteaufnahme 13 ist an einer einzigen Klemmschale 8 angeordnet und nicht durch eine Trennebene 7 unterteilt. Gemäß Figur 1 verfügt eine der Klemmschalen 8 über eine vollständige Halteaufnahme 13, während die andere Klemmschale 8 an der entsprechenden Seite geschlossen ist. Das Ausführungsbeispiel gemäß Figur 4 besitzt an beiden Klemmschalen 8 jeweils eine vollständige Halteaufnahme 13. Die Längsachse 6' der jeweils vollständigen Halteaufnahme 13 steht vorzugsweise senkrecht auf den Längsachsen 6 der in der Trennebene 7 liegenden Halteaufnahmen 4, wobei sich vorzugsweise alle Achsen in einem gemeinsamen Punkt schneiden. Das heißt die vollständige Halteaufnahme 13 ist bezüglich der Außenkontur der Klemmschale 8 insbesondere mittig angeordnet.

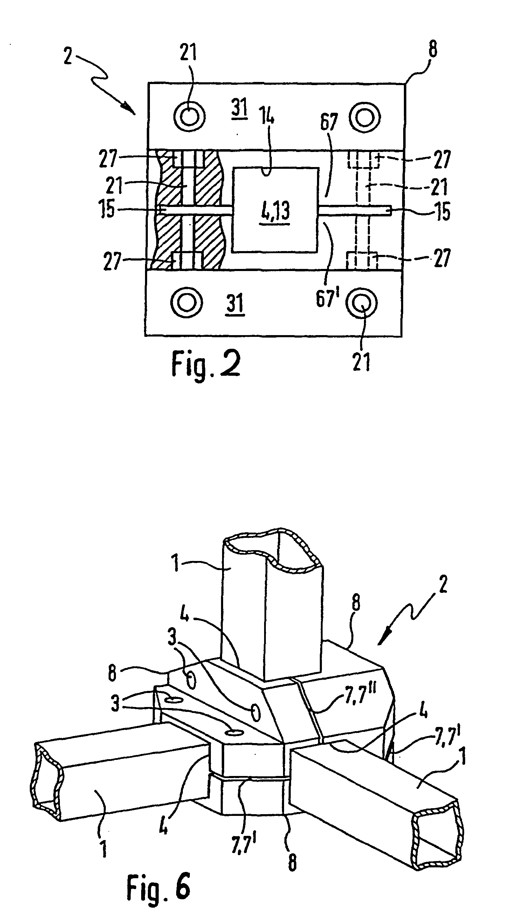

In einer die vollständige Halteaufnahme 13 umschließenden Wand 14 ist wenigstens ein Spannschlitz 15 eingebracht, der zur Halteaufnahme 13 hin offen ist und zum Ermöglichen des Festspannens des in der vollständigen Halteaufnahme 13 festlegbaren Längselementes 1 dient. Bei den Ausführungsbeispielen gemäß Figuren 1, 2 und 4 sind zwei Spannschlitze 15 vorgesehen, die zweckmäßigerweise derart angeordnet sind, daß sie sich auf entgegengesetzten Seiten der vollständigen Halteaufnahme 13 quer zu deren Längsachse gegenüberliegen und die Wand 14 teilweise aufspalten. Die beiden Spannschlitze 15 verlaufen in Längsrichtung der vollständigen Halteaufnahme 13, wobei sie die Wand 14 und somit die betreffende Klemmschale 8 zweckmäßigerweise nicht vollständig in Längsrichtung 6 durchsetzen, sondern an der der Trennebene 7 zugewandten innenliegenden Öffnung 20 der vollständigen Halteaufnahme 13 ein Stabilisierungsstück 16 stehen lassen. Das Stabilisierungsstück 16 dient der Stabilität der Klemmschale 8 und könnte je nach gewähltem Material und Dimension der Klemmschale auch entfallen, falls die Stabilität der Klemmschale 8 nach wie vor gewährleistet wäre, beispielsweise, indem die Spannschlitze wie in Figuren 1 und 2 auf der der Halteaufnahme 13 entgegengesetzten Seite innerhalb der Klemmschale 8 enden.

Ein jeweiliger Spannschlitz 15 erstreckt sich somit beim Ausführungsbeispiel ausgehend von dem die äussere Öffnung der vollständigen Halteaufnahme 13 umgebenden Randbereich 66 der Außenfläche der Klemmschale 8 in Längsrichtung 6 dieser Halteaufnahme 13, wobei er vor der der Trennebene 7 zugewandten inneren Öffnung der Halteaufnahme 13 endet. Mithin ist er an der einen Axialseite zur Außenfläche 68 der Klemmschale 8 offen, während er an der entgegengesetzten Axialseite geschlossen ist. Seine Ausdehnung quer zur Längsachse der Halteaufnahme 13 ist so bemessen, daß die von ihm unterteilten Klemmschalenpartien 67, 67' ausreichend Flexibilität haben, um beim, Angriff einer rechtwinkelig zur Ausdehnungsrichtung des Spannschlitzes 15 an ihnen angreifenden Kraft aufeinanderzu bewegt werden zu können. So wäre es denkbar, die Ausdehnung des Spannschlitzes 15 rechtwinkelig zur Längsachse 6 der Halteaufnahme 13 so zu wählen, daß der Spannschlitz 15 über seine gesamte Länge zur Außenfläche 68 der Klemmschale ausmündet, wie dies beim Ausführungsbeispiel der Figur 4 der Fall ist. Die entsprechende Mündung 73 hat hierbei wegen der kugeligen Formgebung eine bogenförmige Erstreckung.

Im Gegensatz dazu ist die rechtwinkelig zur Längsachse 6 der Halteaufnahme 13 gemessene Tiefe der Spannschlitze 15 beim Ausführungsbeispiel gemäß Figur 1 so gewählt, daß der Spannschlitz an seiner der zur Halteaufnahme 13 weisenden Öffnung entgegengesetzten Seite geschlossen ist. Er endet also im Innern der Klemmschale 8.

Bei allen Ausführungsbeispielen ist die in Längsrichtung 6 der Halteaufnahme 13 gemessene Länge des jeweiligen Spannschlitzes so bemessen, daß er vor Erreichen der an der Klemmschale vorgesehenen Halteaufnahmen-Abschnitte 4' endet. Je schmäler das verbleibende Stabilisierungsstück 16 ist, desto größer ist die Elastizität im Bereich des Spannschlitzes 15 insbesondere dann, wenn dieser auf der der Halteaufnahme 13 entgegengesetzten Seite zur Außenfläche 68 offen ist.

Jeder Spannschlitz 15 ist zweckmäßigerweise von einer Spanneinrichtungsaufnahme 21 derart durchsetzt, daß die in Gebrauchslage in der Spanneinrichtungsaufnahme 21 befindliche Spanneinrichtung 3 ebenfalls den Spannschlitz 15 quer zu seiner Ausdehnungsebene durchsetzt und durch Betätigung in der Lage ist, die Breite des Spannschlitzes 15 durch Verformung der Klemmschalenpartien 67, 67' zu verkleinern. Aus Figur 2 erkennt man, daß die Spanneinrichtungsaufnahmen 21 insbesondere senkrecht zu einem jeweiligen Spannschlitz 15 verlaufen. Das Verengen der Spannschlitze 15 durch Anziehen der Spanneinrichtungen 3 hat zur Folge, daß sich der Querschnitt der vollständigen Halteaufnahme 13 verengt bzw. reduziert wird und ein darin befindliches Längselement 1 in der vollständigen Halteaufnahme 13 verspannt wird. Die Querschnittsform der vollständigen Halteaufnahme 13 entspricht zweckmäßigerweise derjenigen der durch eine Trennebene 7 unterteilten Halteaufnahmen 4.

Auch zum Verspannen der Klemmschalen 8 miteinander sind beispielsweise Spanneinrichtungsaufnahmen 21 vorgesehen. Diese sind außerhalb der Halteaufnahmen 4 derart neben diesen angeordnet, daß die Spanneinrichtungen 3 nicht durch die Halteaufnahmen 4 hindurchgehen. Zweckmäßigerweise befinden sich die Spanneinrichtungsaufnahmen 21 in zumindest einigen und vorzugsweise in allen Verbindungskörperpartien 29 zwischen jeweils benachbarten Halteaufnahmen 4, die im Falle der Figuren 1 und 2 von Eckenbereichen und im Falle der Figur 4 von abgerundeten Übergangsbereichen gebildet sind.

Die Spanneinrichtungen 3 sind vorzugsweise aus einer Schraube 22 und einem komplementären Gegengewinde 23 gebildet. In dem gemäß Figur 1 ausgeführten Verbindungskörper 2 sind die Gegengewinde 23 einer jeweiligen Spanneinrichtung 3 einstückig an einer Klemmschale 8 angebracht. Das Gegengewinde 23 ist dabei als Innengewinde in einer jeweiligen Spanneinrichtungsaufnahme 21 realisiert. Dabei weist nur eine der Klemmschalen 8 des Verbindungskörpers 2 das Gegengewinde 23 auf. Der in der jeweils anderen Klemmschale 8 befindliche Abschnitt einer Spanneinrichtungsaufnahme dient zur Aufnahme der Schraube 22 und ist gewindelos ausgebildet.

Je nach verwendetem Material für die Herstellung eines Verbindungskörpers 2, beispielsweise wenn dieser aus Kunststoffmateiral besteht, kann ein in eine Klemmschale 8 eingebrachtes Innengewinde nicht ausreichend stabil sein, um die notwendigen Spannkräfte einer jeweiligen Spanneinrichtung 3 zu erzeugen. Dann besteht alternativ die Möglichkeit, eine Schraubenmutter 24 als Gegengewinde 23 einzusetzen.

Die Spanneinrichtungsaufnahmen 21 sind beispielsweise an ihren beiden, unterschiedlichen Klemmschalen 8 zugeordneten Enden mit Erweiterungen 27 versehen, um ein Versenken der Schraubenköpfe bzw. der eventuell vorhandenen Schraubenmutter 24 zu ermöglichen. Die Erweiterungen sind so dimensioniert, daß weder die Schraube 22, noch die eventuell vorhandene Schraubenmutter 24 in Gebrauchslage aus dem Verbindungskörper 2 hervorstehen. Insbesondere sind dabei zumindest die der Aufnahme einer Schraubenmutter 24 dienenden Erweiterungen 27 mit einem mehreckigen, insbesondere sechseckigen, an die Kontur der Schraubenmutter angepaßten Umriß versehen, so daß eine Sechskantausnehmung 28 gebildet wird. Bei der Montage kann die Schraubenmutter 24 in die Sechskantausnehmung 28 eingreifen und ist somit beim Drehen der zugeordneten Schraube 22 gegen ein Verdrehen gesichert.

Es ist ferner von Vorteil, wenn die komplementär zur Außenkontur der Schraubenmutter 24 gestaltete Innenkontur der Ausnehmung 28 so geformt ist, daß die Schraubenmutter mit zumindest leichtem Preßsitz darin gehalten wird. Auf diese Weise erhält man neben der Verdrehsicherung auch eine Verliersicherung für die Schraubenmuttern 24.

In der Regel werden alle Erweiterungen 27 in Form einer Sechskantausnehmung 28 gestaltet, so daß eine richtungsunabhängige Montage einer jeweiligen Spanneinrichtung 3 möglich ist.

Beim Ausführungsbeispiel gemäß Figur 1 verfügt die unten liegende Klemmschale 8 ausschließlich über Halteaufnahmen-Abschnitte 4' und hat keine zusätzliche vollständige Halteaufnahme 13. Sie kann daher mit äußerst geringer Bauhöhe ausgeführt werden, wobei ihre der Fügefläche 26 entgegengesetzte Außenfläche vorzugsweise eben abgeflacht und vollständig geschlossen ist. Hingegen hat die mit einer zusätzlichen vollständigen Halteaufnahme 13 versehene andere Klemmschale 8 rechtwinkelig zur Fügefläche 26 eine größere Bauhöhe, um die zusätzliche vollständige Halteaufnahme 13 mit ausreichend großer Länge ausbilden zu können. Zweckmäßigerweise ist jedoch keine konstante Bauhöhe vorgesehen, vielmehr ist die Klemmschale 8 an der der Fügefläche 26' entgegengesetzten Außenseite abgestuft. Die Klemmschale 8 hat hier eine mittige, die Halteaufnahme 13 und die Spannschlitze 15 enthaltende rippenähnliche Erhebung 30, die beidseits von einer stufenartigen Ausnehmung 31 flankiert ist. An diesen Ausnehmungen 31 münden die Spanneinrichtungsaufnahmen 21 sowohl der den Spannschlitzen 15 als auch der den beiden Klemmschalen 8 zugeordneten Spanneinrichtungen 3 aus. Dadurch ist gewährleistet, daß die Spanneinrichtungen 3 gut zugänglich sind.

Beim Ausführungsbeispiel der Figur 4 verfügt jede Klemmschale 8 im Zwischenbereich zwischen benachbarten Halteaufnahme-Abschnitten 4' über eine Vertiefung 77, in die jeweils eine einen Spannschlitz 15 zugeordnete Spanneinrichtungsaufnahme 21 als auch eine der anderen Spanneinrichtungsaufnahmen 21 ausmündet. Auf diese Weise sind jeweils zwei Spanneinrichtungen 3 von einer gemeinsamen Vertiefung 77 her zugänglich und dort geschützt untergebracht.

Bei den Ausführungsbeispielen gemäß Figuren 1 und 2 sind die die Mündungen der Halteaufnahmen 4 umgebenden Randbereiche 66 aufgrund der im wesentlichen würfel- oder quaderähnlichen Gestalt automatisch als Planflächen ausgeführt. Derartige Planflächen sind unter Umständen für bestimmte Zwecke nützlich. Um auch bei dem Ausführungsbeispiel gemäß Figur 4 entsprechende Planflächen zu erhalten, ist dort die Außenfläche 68 des jeweiligen Verbindungskörpers 2 an dem Randbereich 66 eben abgeflacht, weshalb hier keine exakte Kugelform mehr vorliegt. An diesem abgeflachten ebenen Randbereich 66 können beispielsweise Räder von angebauten Zusatzeinrichtungen ablaufen. Zweckmäßigerweise haben sämtliche Halteaufnahmen 4, 13 in ihrem Mündungsbereich entsprechend abgeflachte Randbereiche 66, die gemäß Figur 4 kreisförmig konturiert sind.

Um den Einsatz eines Verbindungskörpers 2 flexibler zu gestalten, sieht die beispielsgemäße Verbindungseinrichtung auch Adapterteile 32 vor, die zum Festspannen eines beliebigen zylindrischen Teiles in einem mit rechteckigen Halteaufnahmen 4 versehenen Verbindungskörper 2 dienen können. Das Adapterteil 32 weist dafür einen länglichen Klemmabschnitt 38 mit einer zylinderförmigen, das Adapterteil entlang seiner Längsachse vollständig durchdringende Durchbrechung auf, die eine Klemmaufnahme 33 begrenzt. Ein zu spannendes zylindrisches Teil 41 wird in der Klemmaufnahme 33 des Adapterteils 32 festgeklemmt. Hierzu wird das Adapterteil 32 mit seinem Klemmabschnitt 38, dessen Außenkontur an die Innenkontur der Halteaufnahme 4 angepaßt ist, in die Halteaufnahme 4 eingesteckt, wobei das festzuklemmende zylindrische Teil 41 seinerseits bereits in die Klemmaufnahme 33 eingesteckt sein kann oder anschließend in diese eingesteckt wird. Dann wird der Klemmabschnitt 38 mit Querkräften beaufschlagt, so daß er sich in Radialrichtung verformt und seinerseits das zylindrische Teil 41 beaufschlagt und dieses klemmend hält. Die Spannkräfte werden vorzugsweise von den Spanneinrichtungen 3 eines Verbindungskörpers 2 erzeugt und mittels der Wände 11, 14 der betreffenden Halteaufnahme 4 auf das eingesteckte Adapterteil 32 übertragen. Die Verringerung des Querschnitts einer Halteaufnahme 4 beim Spannen bewirkt eine Verringerung des Querschnitts des in der Halteaufnahme 4 befindlichen Klemmabschnitts 38 des Adapterteils 32, so daß der Umfang der zylindrischen Innenkontur zumindest eines Abschnitts der Klemmaufnahme 33 ebenfalls verringert wird. Die daraus resultierende radial auf das in der Klemmaufnahme 33 befindliche zylindrische Teil 41 gerichtete Kraft fixiert dieses im Adapterteil 32 beziehungsweise mittelbar am Verbindungskörper 2.

Das in Figur 3 dargestellte Adapterteil 32 ist im Bereich der Klemmaufnahme 33 durch entlang seiner Längsrichtung eingebrachte schlitzartige Zwischenräume 34 in mehrere Klemmelemente 35 gegliedert. Die Klemmelemente 35 sind in Umfangsrichtung durch die Zwischenräume 34 beabstandet. Beispielsgemäß erstrekken sich die Zwischenräume 34 über die Länge des Klemmabschnittes 38, an den sich ein ringförmiges Verbindungsstück 36 anschließt, mit dem die Klemmelemente 35 vorzugsweise einstückig verbunden sind. Das Verbindungsstück 36 kann so ausgebildet sein, daß es in Gebrauchslage des Adapterteils 32 zumindest teilweise außerhalb der Halteaufnahme 4 liegt und einen Anschlag 37 bildet, der in Gebrauchslage außen im Bereich einer Halteaufnahme 4 an wenigstens einem Klemmkörper 8 anliegt, um dadurch die Position des Adapterteils 32 in Gebrauchslage zu definieren und die Einstecktiefe zu begrenzen.

Beim Aufbau von mittels der Verbindungseinrichtung hergestellten Konstruktionen kann es wünschenswert sein, beliebige Winkelstellungen vorgeben zu können. Insbesondere sollen vorher nicht bekannte Winkel einstellbar sein, was beispielsweise bei der Justierung von Meßeinrichtungen wie Sensoren notwendig sein kann. Zu diesem Zweck ist ein aus einem zylindrischen ersten Befestigungsabschnitt 41 und einem zweiten Befestigungsabschnitt 42 gebildetes Drehstück 43 vorgesehen. Dieses ist über den zylinderförmigen ersten Befestigungsabschnitt 41 in der Klemmaufnahme 33 des Adapterteils 32 festlegbar, wobei der zweite Befestigungsabschnitt aus der Klemmaufnahme 33 hervorsteht. Das Drehstück 43 kann in einer beliebig um die Längsachse des zylindrischen ersten Befestigungsabschnitts 41 gedrehten Position in der Klemmaufnahme 33 positioniert werden. Am zweiten Befestigungsabschnitt können weitere Bauteile in beliebiger, durch eine Drehung um die Längsachse des ersten Befestigungsabschnitts 41 wählbarer Winkellage angebracht werden. Das Ausführungsbeispiel in Figur 2 weist zum Anbringen eines weiteren Bauteils eine mit einem Innengewinde versehene Aufnahme 44 für Befestigungselemente 46 auf. In diese kann beispielsweise ein Befestigungselement 46 in Gestalt einer Schraube eingreifen. Anstelle der Aufnahme 44 kann auch eine beliebige andere Befestigungseinrichtung 49 vorgesehen sein.

Die Gestaltung des zweiten Befestigungsabschnitts 42 ist prinzipiell beliebig. Je nach Anwendungsfall kann dieser unterschiedliche Formen annehmen. Bei der Ausführungsvariante gemäß Figur 3 ist er quaderförmig ausgebildet.

In der Praxis ist es häufig erforderlich, Spielraum für Erweiterungen und Verbesserungen zur Verfügung zu haben. Für ein Verbindungssystem bedeutet dies beispielsweise, daß Platz bereit gestellt wird, um weitere Bauteile an ein solches System anzubringen. Hierfür ist beispielsweise eine Nutenschiene 47 geeignet. Im Ausführungsbeispiel gemäß Figur 3 weist diese ein C-förmiges Profil auf. In dieser Nutenschiene 47 sind Nutensteine 48 entlang der Längsachse der Nutenschiene 47 zum Anbringen weiterer Bauelemente verschiebbar und festlegbar gelagert. Die Nutensteine 48 weisen dafür Befestigungseinrichtungen 49 auf. Die Nutenschiene 47 enthält an einer Ihrer Längsseiten eine Nutöffnung 50. Die in der Nutenschiene 47 geführten Nutensteine 48 werden an dieser Seite durch abstehende Abschnitte 53 der Schienenwand 54 derart übergriffen, daß die abstehenden Abschnitte 53 zwischen dem Nutenstein 48 und einem an ihm angebrachten weiteren Bauteil 55 einspannbar sind. Durch dieses Verspannen wird die Position des Bauteils definiert. Je nach Länge der Nutenschiene 47 können beliebig viele weitere Bauteile angebracht werden.

Ein mit einem rechtwinkelig abgewinkelten Abschnitt versehenes Winkelstück ist ein Beispiel für ein weiteres Bauteil 55, das mit dem Nutenstein 48 verbindbar ist und der Befestigung eines Sensorelements 56 dient. Der Nutenstein 48 kann entlang der Längsachse der Nutenschiene 47 verschoben und somit die Position des Sensorelementes 56 variiert werden.

Die Nutenschiene kann beispielsweise direkt in einer Halteaufnahme 4 eines Verbindungskörpers 2 festgelegt sein oder aber über einen entsprechend einem Nutenstein gestalteten zweiten Befestigungsabschnitt 42 an einem Drehstück 43 befestigt sein. Über dieses Drehstück 43 und ein eventuell vorhandenes Adapterteil 32 wird dann die Nutenschiene 47 mittelbar mit einem Verbindungskörper 2 verbunden.

Sollen durch Verwendung der Verbindungseinrichtung beispielsweise Gehäuse konstruiert werden oder werden Wandelemente benötigt, so kann wenigstens eine durch die Längselemente 1 gebildete Rahmenfläche durch einen plattenähnlichen Körper 60 abgedeckt werden. Zur Verbindung dieses plattenähnlichen Körpers mit Längselementen 1 sind beispielsgemäß Plattenanschlußteile 61 vorgesehen (Figur 7), die mittels einer Spanneinrichtung 62 an einem Längselement 1 festlegbar sind und über eine Befestigungseinrichtung 63 mit dem plattenähnlichen Körper 60 verbunden werden können. In der Ausführungsform gemäß Figur 7 dient die Spanneinrichtung 62 gleichzeitig als Befestigungseinrichtung 63 und ist durch eine Schraube 64 und eine Schraubenmutter 65 gebildet. Das Plattenanschlußteil 61 enthält eine zur Aufnahme eines Längselements 1 vorgesehene Spann-Durchbrechung 69, die das Längselement 1 umschließt. Ferner ist das Plattenanschlußteil 61 zweckmäßigerweise U-förmig ausgebildet. Ein erster Schenkel 70 und ein zweiter Schenkel 71 dieses U-förmigen Plattenanschlußteils 61 liegen sich in Gebrauchslage gegenüber und sind über ein Verbindungsstück 72 an jeweils einem ihrer Enden im Bereich der Spann-Durchbrechung 69 miteinander verbunden, um so die U-artige Form zu bilden. An den beiden entgegengesetzten Enden der Schenkel 70, 71 ist die Spanneinrichtung 62 und die Befestigungseinrichtung 63 vorgesehen. Einer der beiden Schenkel 70, 71 kann in diesem Bereich zum jeweils anderen Schenkel hin fortgesetzt sein, so daß sich der Abstand zwischen den beiden Schenkeln 70, 71 in Gebrauchslage verringert, beziehungsweise entfällt.

An der Verbindungsstelle 75 zwischen einem der Schenkel 70, 71 und dem Verbindungsstück 72 ist die wirksame Verbindungsfläche durch eine Einkerbung 76 verringert, um die beiden Schenkel 70, 71 beim Festspannen des Plattenanschlußteils 61 an einem Längselement 1 besser aufeinander zubewegen zu können. Durch die aufeinander zu gerichtete Relativbewegung der beiden Schenkel 70, 71 des Plattenanschlußteils 61 beim Verspannen wird auch hier wiederum der Querschnitt der Spann-Durchbrechung so verringert, daß eine klemmende Beaufschlagung eines darin befindlichen Längselements 1 erreicht wird. Die Einkerbung 76 ermöglicht im übrigen auch ein Aufklappen bzw. Aufschwenken des einen Schenkels 70, da eine Art Filmscharnier vorliegt. Dies erleichtert das Ansetzen des Plattenanschlußteils 61 an ein Längselement.

Als Material für die Verbindungseinrichtung kann zumindest teilweise Kunststoff vorgesehen sein, wobei insbesondere die Verbindungskörper als Kunststoffmaterial bestehen können. Im Spritzgießverfahren sind derartige komplexe Kunststoffkörper einfach herstellbar und durch ihr geringes Gewicht auch für tragbare Konstruktionen geeignet.

Aus Figur 6 geht eine Ausführungsform eines Verbindungskörpers 2 hervor, der durch zwei Trennebenen 7 in mehr als zwei Klemmschalen 8 unterteilt ist. Zur besseren Unterscheidung sind die beiden Trennebenen 7 in Figur 8 mit Bezugsziffern 7' und 7'' gekennzeichnet. Die erste Trennebene 7' entspricht hinsichtlich Ausgestaltung und Anordnung derjenigen, wie sie bei den übrigen Ausführungsbeispielen verwirklicht ist. Die weitere Trennebene 7'' verläuft rechtwinkelig zu der ersten Trennebene 7', durchsetzt den Verbindungskörper 2 jedoch nicht vollständig. Man kann sich dies so vorstellen, daß die erste Trennebene 7' den Verbindungskörper 2 in zwei Klemmschalen unterteilt, wobei eine der beiden Klemmschalen durch die weitere Trennebene 7'' ihrerseits in zwei Klemmschalen unterteilt ist. Auf diese Weise liegen beim Ausführungsbeispiel insgesamt drei Klemmschalen vor, die über Spanneinrichtungen 3 gegenseitig verspannbar sind.

In einer weiteren, nicht näher dargestellten Ausführungsform erstreckt sich auch die weitere Trennebene 7'' vollständig durch den Verbindungskörper 2 hindurch, so daß sich vier Klemmschalen ergeben. Insgesamt bleibt jedoch festzuhalten, daß die in Figuren 1 bis 5 beschriebene Ausführungsform mit lediglich zwei Klemmschalen erheblich kostengünstiger zu realisieren ist und auch eine einfachere Handhabung ermöglicht.

## Patentansprüche

1. Verbindungseinrichtung für Längselemente, mit mindestens einem Verbindungskörper (2), der wenigstens zwei in verschiedene Richtungen weisende Halteaufnahmen (4) aufweist, die jeweils für die Aufnahme eines Längenabschnittes eines mittels einer Spanneinrichtung (3) am Verbindungskörper (2) festzuspannenden Längselements (1) geeignet sind, wobei der Verbindungskörper (2) im Bereich wenigstens einer durch mindestens eine Halteaufnahme (4) hindurchgehenden Trennebene (7) in mehrere separate Klemmschalen (8) unterteilt ist, die jeweils einen Halteaufnahmen-Abschnitt (4') der jeweiligen, von der Trennebene (7) durchsetzten Halteaufnahme (4) aufweisen und die paarweise durch mindestens eine Spanneinrichtung (3) derart lösbar miteinander verspannbar sind, daß sie die in den Halteaufnahmen (4) befindlichen Längenabschnitte der Längselemente (1) mit ihren Halteaufnahmen-Abschnitten (4') klemmend beaufschlagen und festhalten, und wobei an wenigstens einer der separaten Klemmschalen (8) eines Verbindungskörpers (2) zusätzlich zu wenigstens einem Halteaufnahmen-Abschnitt (4') mindestens eine vollständige Halteaufnahme (13) angeordnet ist, **dadurch gekennzeichnet, daß** in der die vollständige Halteaufnahme (13) umschließenden Wand (14) der betreffenden Klemmschale (8) zum klemmenden Beaufschlagen eines in ihr befindlichen Längenabschnittes eines Längselements (1) wenigstens ein zu der Halteaufnahme (13) offener Spannschlitz (15) ausgebildet ist, dem mindestens eine Spanneinrichtung (3) zugeordnet ist, mit der sich seine Breite und dadurch der Querschnitt der Halteaufnahme (13) zum Verspannen eines eingesteckten Längselements (1) durch elastische Verformung verringern läßt.

2. Verbindungseinrichtung nach Anspruch 1, **dadurch gekennzeichnet, daß** mindestens ein Verbindungskörper (2) durch eine Trennebene (7) in genau zwei Klemmschalen (8) geteilt ist.

3. Verbindungseinrichtung nach Anspruch 1 oder 2, **dadurch gekennzeichnet, daß** eine Trennebene (7) mindestens eines Verbindungskörpers (2) durch vier Halteaufnahmen (4) hindurchgeht, die derart angeordnet sind, daß benachbarte Halteaufnahmen (4) in senkrecht zueinander und parallel zur Trennebene (7) ausgerichtete Richtungen weisen.

4. Verbindungseinrichtung nach einem der Ansprüche 1 bis 3, **dadurch gekennzeichnet, daß** die vollständige, an einer Klemmschale (8) des Verbindungskörpers (2) angeordnete Halteaufnahme (13) senkrecht zu den Richtungen der Halteaufnahmen (4) verläuft, die durch die Trennebene (7) geteilt sind.

5. Verbindungseinrichtung nach einem der Ansprüche 1 bis 4, **dadurch gekennzeichnet, daß** mindestens ein Verbindungskörper (2) wenigstens ein Paar Halteaufnahmen (4) enthält, die derart einander gegenüberliegend angeordnet sind, daß ihre Längsachsen (6) zusammenfallen wobei sie zweckmäßigerweise an den einander axial zugewandten Innenseiten offen sind und unter Bildung eines Durchganges (17) miteinander in Verbindung stehen.

6. Verbindungseinrichtung nach einem der Ansprüche 1 bis 5, **dadurch gekennzeichnet, daß** alle Halteaufnahmen (4, 13) eines Verbindungskörpers den gleichen Querschnitt aufweisen.

7. Verbindungseinrichtung nach einem der Ansprüche 1 bis 5, **dadurch gekennzeichnet, daß** ein Verbindungskörper (2) als Übergangsstück (9) ausgebildet ist und mindestens zwei Halteaufnahmen (4) unterschiedlichen Querschnitts enthält.

8. Verbindungseinrichtung nach einem der Ansprüche 1 bis 7, **dadurch gekennzeichnet, daß** der Querschnitt mindestens einer und vorzugsweise sämtlicher Halteaufnahmen (4, 13) eines Verbindungskörpers (2) rechteckig und vorzugsweise quadratisch ist.

9. Verbindungseinrichtung nach einem der Ansprüche 1 bis 8, **dadurch gekennzeichnet, daß** die Längselemente (1) von Profilstäben, insbesondere in Gestalt von Vierkant-Rohren, gebildet sind.

10. Verbindungseinrichtung nach einem der Ansprüche 1 bis 9, **dadurch gekennzeichnet, daß** die Spanneinrichtungen (3) ausserhalb der Halteaufnahmen (4) neben diesen und insbesondere in den zwischen benachbarten Halteaufnahmen (4) befindlichen Verbindungskörperpartien (29) angeordnet sind.

11. Verbindungseinrichtung nach einem der Ansprüche 1 bis 10, **dadurch gekennzeichnet, daß** wenigstens eine Spanneinrichtung (3) eines Verbindungskörpers (2) eine Schraube (22) und ein komplementäres Gegengewinde (23) aufweist.

12. Verbindungseinrichtung nach Anspruch 11, **dadurch gekennzeichnet, daß** das Gegengewinde (23) einstückiger Bestandteil einer Klemmschale (8) ist.

13. Verbindungseinrichtung nach Anspruch 12, **dadurch gekennzeichnet, daß** das Gegengewinde (23) an einer Schraubenmutter (24) vorgesehen ist, wobei die Schraubenmutter (24) zweckmäßigerweise verdrehgesichert an der zugeordneten Klemmschale angeordnet ist, beispielsweise indem wenigstens eine Klemmschale (8) zur Aufnahme einer Schraubenmutter (24) geeignete komplementäre Mehrkant-Ausnehmungen (28) aufweist.

14. Verbindungseinrichtung nach einem der Ansprüche 1 bis 13, **dadurch gekennzeichnet, daß** wenigstens ein Verbindungskörper (2) im Bereich der Trennebene (7) einen rechteckförmigen und vorzugsweise quadratischen Umriß aufweist, wobei er insgesamt eine würfelähnliche Gestalt haben kann.

15. Verbindungseinrichtung nach einem der Ansprüche 1 bis 14, **dadurch gekennzeichnet, daß** wenigstens ein Verbindungskörper (2) im Bereich der Trennebene (7) einen kreisförmigen Umriß hat.

16. Verbindungseinrichtung nach einem der Ansprüche 1 bis 15, **dadurch gekennzeichnet, daß** mindestens ein Verbindungskörper (2) eine kugelähnlich Gestalt hat

17. Verbindungseinrichtung nach Anspruch 16, **dadurch gekennzeichnet, daß** der Verbindungskörper (2) aus zwei halbkugelähnlich gestalteten Klemmschalen (8) besteht.

18. Verbindungseinrichtung nach einem der Ansprüche 1 bis 17, **dadurch gekennzeichnet, daß** ein Adapterteil (32) vorgesehen ist, das ein Spannen eines zylindrischen Teiles (41) in einer Rechteckquerschnitt aufweisenden Halteaufnahme (4, 13) eines Verbindungskörpers (2) ermöglicht, wobei es einen in einer Halteaufnahme (4, 13) eines Verbindungskörpers (2) anzuordnenden, radial verformbaren Klemmabschnitt (38) mit an den Querschnitt der Halteaufnahme (4, 13) angepaßter Aussenkontur und eine Klemmaufnahme (33) definierender zylindrischer Innenkontur zur Aufnahme des zu spannenden zylindrischen Teiles (41) aufweist.

19. Verbindungseinrichtung nach Anspruch 18, **dadurch gekennzeichnet, daß** der Klemmabschnitt (38) in mehrere längsverlaufende, radial bewegbare und in Umfangsrichtung der Klemmaufnahme (33) beabstandete Klemmelemente (35) unterteilt ist.

20. Verbindungseinrichtung nach Anspruch 18 oder 19, **dadurch gekennzeichnet, daß** ein Drehstück (43) vorhanden ist, das einen in der Klemmaufnahme (33) festlegbaren zylindrischen ersten Befestigungsabschnitt (41) und einen im festgelegten Zustand aus der Klemmaufnahme (33) herausragenden zweiten Befestigungsabschnitt (42) zum Befestigen mindestens eines weiteren Bauteiles aufweist, wobei der zweite Befestigungsabschnitt (42) eines Drehstücks (43) insbesondere quaderförmig ausgebildet ist.

21. Verbindungseinrichtung nach Anspruch 20, **dadurch gekennzeichnet, daß** eine insbesondere C-profilförmige, an dem zweiten Befestigungsabschnitt (42) des Drehstücks (43) festlegbare Nutenschiene (47) vorgesehen ist, in der mit einer Befestigungspartie (44) für Befestigungselemente (46) versehene Nutensteine (48) verschiebbar gelagert werden können, die zur Befestigung weiterer Bauelemente (55) vorgesehen sind.

22. Verbindungseinrichtung nach einem der Ansprüche 1 bis 21, **dadurch gekennzeichnet, daß** ein der Anbringung von plattenähnlichen Körpern (60) an einem Längselement (1) dienendes Plattenanschlußteil (61) vorgesehen ist, das mittels einer Spanneinrichtung (62) an einem Längselement (1) festlegbar ist, wobei die Spanneinrichtung (62) gleichzeitig zur Anbringung des Plattenanschlußteils (61) an den plattenähnlichen Körper (60) dient.

23. Verbindungseinrichtung nach einem der Ansprüche 1 bis 22, **dadurch gekennzeichnet, daß** die Verbindungskörper (2) aus Kunststoffmaterial bestehen.

## Claims

1. Connecting device for longitudinal elements, with at least one connecting body (2) provided with at least two retaining locations (4) pointing in different directions, each suitable for locating a longitudinal section of a longitudinal element (2) to be clamped to the connecting body (2) by means of a clamping device (3), the connecting body (2) being divided, in the area of at least one plane of separation (7) passing through at least one retaining location (4), into a plurality of separate clamping shells (8), each of which is assigned a retaining location section (4') of the retaining location (4) passing through the plane of separation (7), and pairs of which can be releasably clamped together by at least one clamping device (3), so that they clamp, pressurise and retain the longitudinal sections of the longitudinal elements (1) located in the retaining locations (4) with their retaining location sections (4'), and at least one of the separate clamping shells (8) of a connecting body (2) being provided, in addition to at least one retaining location section (4'), with a complete retaining location (13), **characterised in that** at least one clamping slot (15) open towards the retaining location (13) and assigned at least one clamping device (3), by which its width and thus the cross-section of the retaining location (13) is reduced by elastic deformation for clamping an inserted longitudinal element (1) is formed in the wall (14) enclosing the complete retaining location (13) of the clamping shell (14) in question for the clamping pressurisation of a longitudinal section of a longitudinal element (1) placed therein.

2. Connecting device according to claim 1, **characterised in that** at least one connecting body (2) is divided into exactly two clamping shells (8) by a plane of separation (7).

3. Connecting device according to claim 1 or 2, **characterised in that** a plane of separation (7) of at least one connecting body (2) passes through four retaining locations (4), which are so arranged that adjacent retaining locations (4) point in directions oriented at right angles to each other and parallel to the plane of separation (7).

4. Connecting device according to any of claims 1 to 3, **characterised in that** the complete retaining location (13) provided on a clamping shell (8) of the connecting body (2) extends at right angles to the directions of the retaining locations (4) divided by the plane of separation (7).

5. Connecting device according to any of claims 1 to 4, **characterised in that** at least one connecting body (2) incorporates at least one pair of retaining locations (4), which are so arranged opposite each other that their longitudinal axes (6) coincide, and which are expediently open at their inner sides axially facing each other and connected to each other while forming a connecting passage (17).

6. Connecting device according to any of claims 1 to 5, **characterised in that** all retaining locations (4, 13) of a connecting body have equal cross-sections.

7. Connecting device according to any of claims 1 to 5, **characterised in that** one connecting body (2) is designed as a transition piece (9) and incorporates at least two retaining locations (4) of different cross-sections.

8. Connecting device according to any of claims 1 to 7, **characterised in that** the cross-section of at least one and preferably all of the retaining locations (4, 13) of a connecting body is rectangular, preferably square.

9. Connecting device according to any of claims 1 to 8, **characterised in that** the longitudinal elements (1) are designed as profiled bars, in particular as rectangular tubes.

10. Connecting device according to any of claims 1 to 9, **characterised in that** the clamping devices (3) are arranged outside the retaining locations (4) next thereto and in particular in the connecting body sections (29) located between adjacent retaining locations (4).

11. Connecting device according to any of claims 1 to 10, **characterised in that** at least one clamping device (3) of a connecting body (2) is provided with a screw (22) and a matching counter-thread (23).

12. Connecting device according to claim 11, **characterised in that** the counter-thread (23) forms an integral part of a clamping shell (8).

13. Connecting device according to claim 12, **characterised in that** the counter-thread (23) is provided on a nut (24), the nut (24) expediently being secured against turning on the associated clamping shell, for instance by providing that at least one clamping shell (8) has a matching polygonal recess (28) for the location of a nut (24).

14. Connecting device according to any of claims 1 to 13, **characterised in that** at least one connecting body (2) has a rectangular and preferably square outline in the area of the plane of separation (7) and may have a cube-like shape in general.

15. Connecting device according to any of claims 1 to 14, **characterised in that** at least one connecting body (2) has a circular outline in the area of the plane of separation (7).

16. Connecting device according to any of claims 1 to 15, **characterised in that** at least one connecting body (2) has an approximately spherical shape.

17. Connecting device according to claim 16, **characterised in that** the connecting body (2) consists of two approximately hemispherical clamping shells (8)

18. Connecting device according to any of claims 1 to 17, **characterised in that** an adapter part (32) allowing a cylindrical part (41) to be clamped in a retaining location (4, 13) with a rectangular cross-section of a connecting body (2) is provided, said adapter part having a radially deformable clamping section (38) to be located in a retaining location (4, 13) of a connecting body (2) and provided with an external contour matching the cross-section of the retaining location (4, 13) and a cylindrical internal contour defining a clamping location (33) for the location of the cylindrical part (41) to be clamped.

19. Connecting device according to claim 18, **characterised in that** the clamping section (38) is divided into a plurality of longitudinal, radially movable clamping elements (35) spaced in the circumferential direction of the clamping location (33).

20. Connecting device according to claim 18 or 19, **characterised in that** a rotary piece (43) comprising a cylindrical first mounting section (41) capable of being secured in the clamping location (33) and a second mounting section (42) projecting from the clamping location (33) in the secured state for mounting at least one further component is provided, the second mounting section (42) of a rotary piece (43) being in particular designed as a cuboid.

21. Connecting device according to claim 20, **characterised in that** an in particular C-profiled grooved rail (47) capable of being secured to the second mounting section (42) of the rotary piece (43) is provided, wherein sliding blocks (48) with a mounting section (44) for fastening elements (46) can be movably mounted for mounting further components (55).

22. Connecting device according to any of claims 1 to 21, **characterised in that** a plate connecting part (61) used for fitting plate-like bodies (60) to a longitudinal element (1) and capable of being secured to a longitudinal element (1) by means of a clamping device (62) is provided, the clamping device (62) simultaneously being used for fitting the plate connecting part (61) on the plate-like body (60).

23. Connecting device according to any of claims 1 to 22, **characterised in that** the connecting bodies (2) are made of a plastic material.

## Revendications

1. Dispositif d'assemblage pour éléments allongés, comportant au moins un corps de liaison (2), lequel présente au moins deux logements de maintien (4) orientés dans des directions différentes, qui sont aptes à recevoir chacun une partie de la longueur d'un élément allongé (1) à serrer fermement sur le corps de liaison (2) au moyen d'un dispositif de serrage (3), le corps de liaison (2) étant divisé, dans la zone d'au moins un plan de séparation (7) traversant au moins un logement de maintien (4), en plusieurs coques de serrage (8) séparées qui comportent chacune une portion de logement de maintien (4') du logement de maintien (4) respectif, traversé par le plan de séparation (7), et qui peuvent être serrées entre elles deux par deux, de manière séparable, par au moins un dispositif de serrage (3), de façon à serrer et à fixer les parties de la longueur des éléments allongés (1), qui se trouvent dans les logements de maintien (4), par leurs portions de logement de maintien (4'), et sur au moins l'une des coques de serrage (8) séparées d'un corps de liaison (2) étant disposé, en plus d'au moins une portion de maintien de logement (4'), au moins un logement de maintien (13) complet, **caractérisé en ce que** dans la paroi (14), qui entoure le logement de maintien (13) complet, de la coque de serrage (8) concernée, il est formé, pour serrer une partie de la longueur, se trouvant dans celle-ci, d'un élément allongé (1), au moins une fente de serrage (15) ouverte vers le logement de maintien (13), à laquelle est associé au moins un dispositif de serrage (3) au moyen duquel on peut réduire, par déformation élastique, sa largeur et donc la section transversale du logement de maintien (13), pour serrer un élément allongé (1) enfilé à l'intérieur.

2. Dispositif d'assemblage selon la revendication 1, **caractérisé en ce qu'**au moins un corps de liaison (2) est divisé exactement en deux coques de serrage (8), par un plan de séparation (7).

3. Dispositif d'assemblage selon la revendication 1 ou 2, **caractérisé en ce qu'**un plan de séparation (7) d'au moins un corps de liaison (2) passe à travers quatre logements de maintien (4) qui sont disposés de manière que des logements de maintien (4) adjacents soient orientés dans des directions perpendiculaires entre elles et parallèles au plan de séparation (7).

4. Dispositif d'assemblage selon l'une des revendications 1 à 3, **caractérisé en ce que** le logement de maintien (13) complet, disposé sur une coque de serrage (8) du corps de liaison (2), s'étend perpendiculairement aux directions des logements de maintien (4) qui sont divisés par le plan de séparation (7).

5. Dispositif d'assemblage selon l'une des revendications 1 à 4, **caractérisé en ce qu'**au moins un corps de liaison (2) contient au moins deux logements de maintien (4) qui sont disposés en vis-à-vis de manière que leurs axes longitudinaux (6) coïncident et qu'ils soient ainsi avantageusement ouverts sur les côtés intérieurs tournés axialement l'un vers l'autre, et soient en liaison entre eux en formant un passage (17).

6. Dispositif d'assemblage selon l'une des revendications 1 à 5, **caractérisé en ce que** tous les logements de maintien (4, 13) d'un corps de liaison présentent la même section transversale.

7. Dispositif d'assemblage selon l'une des revendications 1 à 5, **caractérisé en ce qu'**un corps de liaison (2) est réalisé en tant que pièce de transition (9) et renferme au moins deux logements de maintien (4) de section transversale différente.

8. Dispositif d'assemblage selon l'une des revendications 1 à 7, **caractérisé en ce que** la section transversale d'au moins un et de préférence de tous les logements de maintien (4, 13) d'un corps de liaison (2) est rectangulaire et de préférence carrée.

9. Dispositif d'assemblage selon l'une des revendications 1 à 8, **caractérisé en ce que** les éléments allongés (1) sont formés par des barres profilées, en particulier sous la forme de tubes carrés.

10. Dispositif d'assemblage selon l'une des revendications 1 à 9, **caractérisé en ce que** les dispositifs de serrage (3) sont disposés à l'extérieur des logements de maintien (4), à côté de ceux-ci, et en particulier dans les parties du corps de liaison (29) se trouvant entre des logements de maintien (4) adjacents.

11. Dispositif d'assemblage selon l'une des revendications 1 à 10, **caractérisé en ce qu'**au moins un dispositif de serrage (3) d'un corps de liaison (2) comporte une vis (22) et un taraudage (23) complémentaire.

12. Dispositif d'assemblage selon la revendication 11, **caractérisé en ce que** le taraudage (23) fait partie intégrante et d'un seul tenant d'une coque de serrage (8).

13. Dispositif d'assemblage selon la revendication 12, **caractérisé en ce que** le taraudage (23) est prévu sur un écrou (24), l'écrou (24) étant avantageusement monté bloqué en rotation sur la coque de serrage associée, par exemple en prévoyant qu'au moins une coque de serrage (8) présente des évidements polygonaux (28) complémentaires propres à recevoir un écrou (24).

14. Dispositif d'assemblage selon l'une des revendications 1 à 13, **caractérisé en ce qu'**au moins un corps de liaison (2) présente, dans la zone du plan de séparation (7), un contour de forme rectangulaire et de préférence carrée, et peut avoir dans l'ensemble la forme d'un cube.

15. Dispositif d'assemblage selon l'une des revendications 1 à 14, **caractérisé en ce qu'**au moins un corps de liaison (2) présente dans la zone du plan de séparation (7) un contour de forme circulaire.

16. Dispositif d'assemblage selon l'une des revendications 1 à 15, **caractérisé en ce qu'**au moins un corps de liaison (2) a la forme d'une sphère.

17. Dispositif d'assemblage selon la revendication 16, **caractérisé en ce que** le corps de liaison (2) est constitué de deux coques de serrage (8) de forme semi-sphérique.

18. Dispositif d'assemblage selon l'une des revendications 1 à 17, **caractérisé en ce qu'**il est prévu un élément adaptateur (32) qui permet de serrer un élément cylindrique (41) dans un logement de maintien (4, 13), présentant une section transversale rectangulaire, d'un corps de liaison (2), et présente une portion de serrage (38) déformable radialement, à disposer dans un logement de maintien (4, 13) d'un corps de liaison (2), avec un contour extérieur adapté à la section transversale du logement de maintien (4, 13), et un contour intérieur cylindrique qui définit un logement de serrage (33), pour recevoir l'élément cylindrique (41) à serrer.

19. Dispositif d'assemblage selon la revendication 18, **caractérisé en ce que** la portion de serrage (38) est divisée en plusieurs éléments de serrage (35) s'étendant longitudinalement, déplaçables radialement et espacés dans la direction périphérique du logement de serrage (33).

20. Dispositif d'assemblage selon la revendication 18 ou 19, **caractérisé en ce qu'**il est prévu une pièce tournante (43) qui comporte une première portion de fixation (41) cylindrique pouvant être fixée dans le logement de serrage (33), et une deuxième portion de fixation (42) dépassant, à l'état fixé, du logement de serrage (33), pour la fixation d'au moins un autre composant, la deuxième portion de fixation (42) d'une pièce tournante (43) étant réalisée en particulier sous la forme d'un parallélépipède.

21. Dispositif d'assemblage selon la revendication 20, **caractérisé en ce qu'**il est prévu un rail rainuré (47) avec en particulier un profil en.C, qui peut être fixé sur la deuxième portion de fixation (42) de la pièce tournante (43), dans lequel peuvent être montés coulissants des coulisseaux (48) pourvus d'une partie de fixation (44) et des éléments de fixation (46) et qui sont prévus pour la fixation d'autres composants (55).

22. Dispositif d'assemblage selon l'une des revendications 1 à 21, **caractérisé en ce qu'**il est prévu un élément de raccord de plaque (61) servant à la fixation de corps (60) de type plaque sur un élément allongé (1), lequel peut être fixé, au moyen d'un dispositif de serrage (62), sur un élément allongé (1), et le dispositif de serrage (62) servant en même temps à fixer l'élément de raccord de plaque (61) au corps (60) de type plaque.

23. Dispositif d'assemblage selon l'une des revendications 1 à 22, **caractérisé en ce que** les corps de liaison (2) sont en matière plastique.
